# DEMANDE DE BREVET EUROPEEN

(11) **EP 0 743 734 A1**
(43) Date de publication de la demande: **20.11.1996**
(21) Numéro de dépôt: 96410040.8
(22) Date de dépôt: 02.05.1996
(51) Int. Cl.: H02G 3/18

(54) **Boîtier d'encastrement pour appareillage électrique**

(30) Priorité: 17.05.1995 FR 9506070
(71) Demandeur: SCHNEIDER ELECTRIC SA, 92100 Boulogne-Billancourt (FR)
(72) Inventeur: Meyer, Jean-Claude, 38050 Grenoble Cedex 09 (FR); Zinsius, Laurent, 38050 Grenoble Cedex 09 (FR)
(74) Mandataire: Ritzenthaler, Jacques

(57) **Abrégé**

Un boîtier d'encastrement (1) pour un appareil électrique à fixation par vis ou par griffes, comporte un corps en matière plastique moulée, équipé d'une paire de cheminées (3,3') rigides à orifices (6,6') pour le montage des appareils à vis, et une paire de plages d'ancrage (5,5') striées pour le montage des appareils à griffes. Le fût de chaque cheminée (3,3') est cylindrique à l'extérieur et tronqué à l'intérieur de manière à former un méplat (7,7'), situé sensiblement dans le plan et au milieu de la plage d'ancrage (5,5') correspondante.

## Description

L'invention est relative à un boîtier d'encastrement pour un appareil électrique à fixation par vis ou par griffes, comprenant un corps en matière plastique moulée, présentant :
- une section cylindrique avec un fond équipé de trous et/ou de voiles fracturables,
- un rebord annulaire délimitant le pourtour circonférentiel d'une ouverture frontale, à travers laquelle est engagé l'appareil à l'intérieur du boîtier,
- une paire de cheminées conformées selon des fûts, équipés d'orifices pour le montage des appareils à vis,
- et une paire de plages d'ancrage pour le montage des appareils à griffes.

Les boîtiers d'encastrement connus de sections circulaires comportent généralement une zone de fixation à griffes qui est angulairement décalée de la zone de fixation à vis. Un tel décalage doit être pris en compte par l'installateur lors du montage des appareils dans les boîtes d'encastrement.

Une autre solution connue fait usage de deux boîtiers spécifiques, l'un pour une fixation à vis et un autre différent pour une fixation à griffes.

L'objet de l'invention consiste à réaliser un boîtier d'encastrement susceptible de recevoir indifféremment un appareil électrique à vis ou à griffes sans décalage angulaire.

Le boîtier selon l'invention est caractérisé en ce que les plages d'ancrage sont agencées au droit des cheminées rigides et comportent chacune une face striée, légèrement en saillie par rapport à la paroi interne de la surface cylindrique du boîtier et que le fût de chaque cheminée est cylindrique à l'extérieur et tronqué à l'intérieur, de manière à former un méplat situé sensiblement dans le plan et au milieu de la plage d'ancrage correspondante.

Selon une caractéristique de l'invention, l'entraxe des orifices associés aux cheminées est légèrement supérieur à l'intervalle entre les méplats opposés.

Selon une autre caractéristique de l'invention, chaque orifice des cheminées est borgne et de section cylindrique et débouche en retrait du rebord en étant accessible à travers une découpe pratiquée dans la partie supérieure de la surface latérale du corps.
D'autres avantages et caractéristiques ressortiront plus clairement de la description qui va suivre d'un mode de réalisation de l'invention, donné à titre d'exemple non limitatif, et représenté aux dessins annexés dans lesquels :
- la figure 1 est une vue en plan d'une boîte d'encastrement selon l'invention,
- la figure 2 est une vue en coupe selon la ligne II-II de la figure 1,
- la figure 3 montre une vue de détail, à échelle agrandie de l'une des cheminées de la figure 1,
- la figure 4 est une vue en coupe selon la ligne IV-IV de la figure 1,
- la figure 5 représente une vue en coupe selon la ligne V-V de la figure 1.

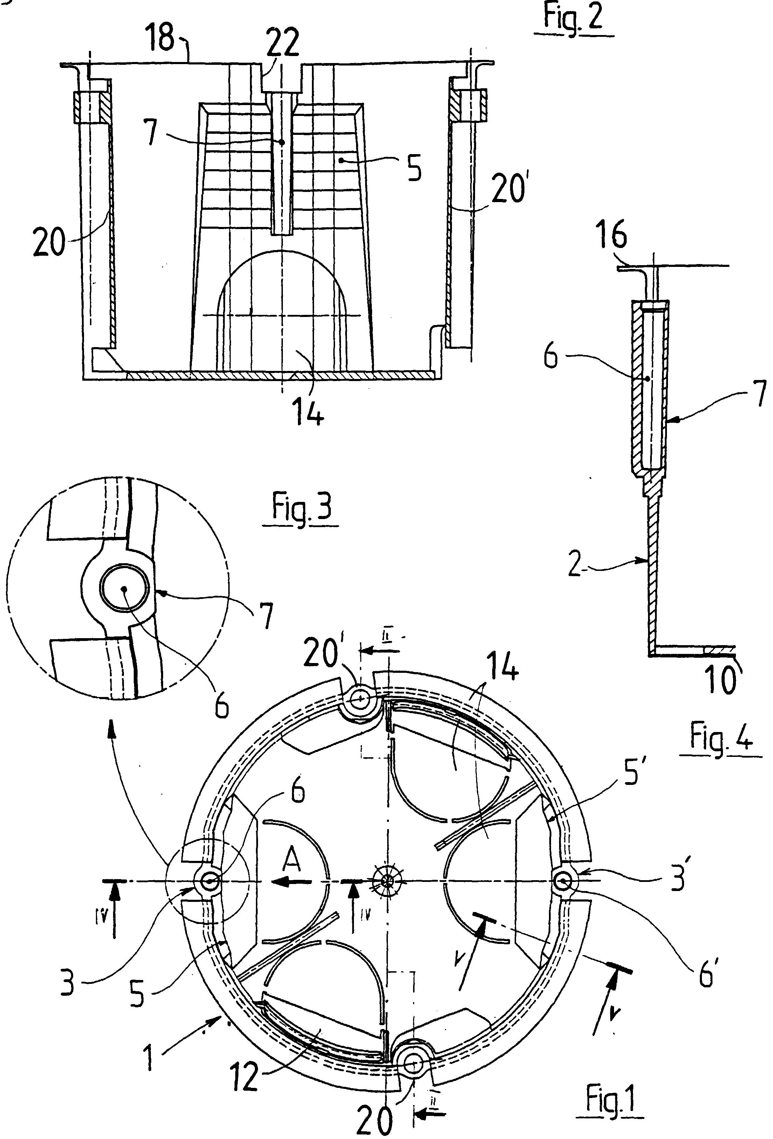

En référence aux figures 1 à 5, un boîtier 1 d'encastrement est susceptible de recevoir indifféremment un appareil électrique à fixation par vis ou un appareil électrique à fixation par griffes. Le boîtier 1 est encastrable dans un orifice conjugué d'un support (non représenté) pouvant être notamment une paroi mince ou creuse.

Le boîtier 1 est formé par un corps 2 en matière plastique moulée présentant une section cylindrique, avec un fond 10 équipé de trous 12 et de voiles 14 fracturables pour le passage de conducteurs ou câbles électriques. Un rebord 16 annulaire est agencé à l'opposé du fond 10 et délimite le pourtour circonférentiel de l'ouverture frontale 18 à travers laquelle sera engagé l'appareil à l'intérieur du boîtier 1.

La surface latérale du corps 2 est munie de deux alvéoles 20,20' (figure 2) s'étendant sur toute la profondeur du boîtier 1, pour le logement d'organes d'ancrage (non représentés) permettant de solidariser le boîtier dans le support. Le corps 2 comporte en plus une paire de cheminées 3,3' diamétralement opposées et comprenant des fûts équipés d'orifices 6,6' borgnes et de sections cylindriques pour le montage des appareils électriques à vis. Les cheminées 3,3' fixes sont décalées angulairement par rapport aux alvéoles 20,20' dans le sens de la profondeur et s'étendent sur une fraction de la surface latérale dans le sens de la profondeur du boîtier 1. L'orifice 6,6' de chaque cheminée 3,3' débouche légèrement en retrait du rebord 16 et est accessible à travers une découpe 22 en forme de U pratiquée dans la partie supérieure de la surface latérale du corps 2. La présence de la découpe 22 permet également l'accès à la tête de vis. Le fond de chaque orifice 6,6' borgne est situé sensiblement au niveau de la partie médiane de la surface latérale.

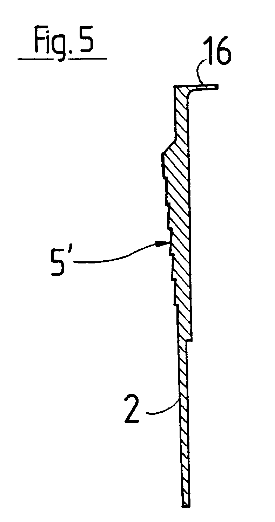

Les cheminées 3,3' viennent directement de moulage avec le corps 2 et sont totalement rigides. Une plage 5,5' d'ancrage est agencée au droit de chaque cheminée 3,3' pour autoriser le montage d'appareils électriques à griffes de fixation. Chaque plage d'ancrage 5,5' présente une face striée en contre dépouille, laquelle se trouve légèrement inclinée et en saillie par rapport à la paroi interne de la surface latérale cylindrique du boîtier 1 (voir figures 2 et 5).

En référence à la figure 3, le fût de chaque cheminée 3,3' est cylindrique à l'extérieur et tronqué à l'intérieur du corps 2, de manière à présenter un méplat 7,7', agencé sensiblement dans le plan et au milieu de la plage d'ancrage 5,5' striée. Un voile 14 fraturable est également prévu sous la surface striée de chaque plage d'ancrage 5,5' (figure 2) et autorise l'entrée latérale d'un câble ou conduit.

L'entraxe des orifices 6,6' ménagés dans les cheminées 3,3' pour la fixation de l'appareillage à vis est standardisé à 60 mm. L'intervalle diamétral entre les méplats 7,7' est légèrement inférieur à l'entraxe précité, pour permettre le passage et l'engagement des griffes contre les plages d'ancrage 5,5'.

Si on adoptait une forme cylindrique complète pour les fûts des cheminées 3,3', l'intervalle diamétral entre les fûts serait trop limité pour le passage des griffes de fixation, et de ce fait, ne permettrait pas le montage des appareils à griffes.

Le boîtier selon les figures 1 à 5 permet la réception des appareillages à fixation à griffes ou à vis, en utilisant le même axe, et sans nécessiter de décalage angulaire en fonction du type d'appareillage. Dans le cas du montage d'un appareil à vis, il suffit d'insérer l'appareil à l'intérieur du boîtier 1 et de visser à fond les vis de fixation (non représentées) dans les orifices 6,6' des cheminées 3,3'. Lors du montage d'un appareil à griffes, on engage l'appareil à griffes et on serre ensuite les griffes de l'appareil contre les plages d'ancrage 5,5' striées.

## Revendications

1. Boîtier (1) d'encastrement pour un appareil électrique à fixation par vis ou par griffes, comprenant un corps (2) en matière plastique moulée, présentant :
- une section cylindrique avec un fond (10) équipé de trous (12) et/ou de voiles (14) fracturables,
- un rebord (16) annulaire délimitant le pourtour circonférentiel d'une ouverture frontale (18), à travers laquelle est engagé l'appareil à l'intérieur du boîtier (1),
- une paire de cheminées (3,3') conformées selon des fûts, équipés d'orifices (6,6') pour le montage des appareils à vis ,
- et une paire de plages d'ancrage (5,5') pour le montage des appareils à griffes, caractérisé en ce que les plages d'ancrage (5,5) sont agencées au droit des cheminées (3,3') rigides et comportent chacune une face striée légèrement en saillie par rapport à la paroi interne de la surface cylindrique du boîtier (1), et que le fût de chaque cheminée (3,3') est cylindrique à l'extérieur et tronqué à l'intérieur, de manière à former un méplat (7,7'), situé sensiblement dans le plan et au milieu de la plage d'ancrage (5,5') correspondante.

2. Boîtier d'encastrement selon la revendication 1, caractérisé en ce que l'entraxe des orifices (6,6') associés aux cheminées (3,3') est légèrement supérieur à l'intervalle entre les méplats (7,7') opposés.

3. Boîtier d'encastrement selon la revendication 1 ou 2, caractérisé en ce que chaque orifice (6,6') des cheminées (3,3') est borgne et de section cylindrique et débouche en retrait du rebord (16) en étant accessible à travers une découpe (22) pratiquée dans la partie supérieure de la surface latérale du corps (2).
